# EUROPÄISCHE PATENTSCHRIFT

(11) **EP 3 172 958 B1**
(45) Veröffentlichungstag und Bekanntmachung des Hinweises auf die Patenterteilung: **26.01.2022**
(21) Anmeldenummer: 16200254.7
(22) Anmeldetag: 23.11.2016
(51) Int. Cl.: A01D 34/10, B62D 17/00, B62D 51/06

(54) **FAHRZEUG MIT EINER ANSCHLUSSVORRICHTUNG FÜR ANBAUGERÄTE**
VEHICLE COMPRISING A CONNECTION DEVICE FOR ATTACHMENTS
VÉHICULE AUTOMOBILE COMPRENANT UN DISPOSITIF D'ATTELAGE POUR ÉQUIPEMENT

(30) Priorität: 23.11.2015 AT 509942015
(43) Veröffentlichungstag der Anmeldung: 31.05.2017
(73) Patentinhaber: Stöckl, Friedrich, 6283 Hippach (AT)
(72) Erfinder: Stöckl, Lukas, 6283 Hippach (AT)
(74) Vertreter: Torggler & Hofinger Patentanwälte

(56) Entgegenhaltungen:
- DE-A1- 19 935 535
- US-A- 2 787 473
- US-A- 3 014 547
- US-A1- 2004 051 269
- US-A1- 2009 281 691

## Beschreibung

Die vorliegende Erfindung betrifft ein Fahrzeug mit den Merkmalen des Oberbegriffs des Anspruchs 1.

Ein gattungsgemäßes Fahrzeug ist in der EP 2 835 044 A1 gezeigt. Die Anordnung der Gelenke erlaubt eine Anpassung der Räder an den Untergrund, durch ein Verschwenken der Räder. Über die Anschlussvorrichtung können Anbaugeräte angetrieben, d. h. gemeinsam mit dem Fahrzeug bewegt werden. Die Anschlussvorrichtung kann auch für den Transport von Energie zum Anbaugerät verwendet werden.

Fährt das in der EP 2 835 044 A1 beschriebene Fahrzeug so entlang eines Hanges oder Berges, dass sich das eine Rad bergseitig und das andere Rad talseitig befindet, kann es durch den Einfluss der Schwerkraft zu einem unerwünschten Verschwenken beider Räder in Richtung des Tales kommen.

Ein Fahrzeug mit den Merkmalen des Oberbegriffs des Anspruchs 1 geht aus US 3,014,547 hervor.

Aufgabe der Erfindung ist die Bereitstellung eines gattungsgemäßen Fahrzeugs, bei welchem das oben angesprochene Problem zumindest teilweise vermieden wird.

Diese Aufgabe wird durch ein Fahrzeug mit den Merkmalen des Anspruchs 1 gelöst. Vorteilhafte Ausführungsbeispiele der Erfindung sind in den abhängigen Ansprüchen definiert.

Durch die Stellvorrichtung ist es möglich, aktiv oder passiv Einfluss auf das Verschwenkverhalten der Räder zu nehmen, ggf. unter Berücksichtigung der Verschwenkstellung des bzw. der Räder oder anderer Einflussgrößen (z. B. Neigung des Fahrzeugs). So kann die Stellvorrichtung beispielsweise aktive Stellmechanismen (z. B. Stellmotoren) umfassen, über die eine gewünschte Verschwenkstellung das Rades oder der Räder gemeinsam oder individuell eingestellt werden kann. Z. B. ist es möglich, auf Benutzerwunsch eine unverschwenkte Stellung der Räder zu erzwingen, die Gelenke sozusagen zu sperren. Es kann möglich sein, die Empfindlichkeit des Verschwenkens des Rades oder der Räder gemeinsam oder individuell einzustellen.

Es ist vorgesehen, dass die Stellvorrichtung wenigstens eine Koppelungsvorrichtung umfasst. Die wenigstens eine Koppelungsvorrichtung koppelt die Räder einer Fahrzeugachse derart, dass ein gleichsinniges Verschwenken der Räder, wie es bei der oben beschriebenen Fahrt entlang eines Hanges oder Berges auftreten würde, zumindest teilweise verhindert wird. Da die Koppelungsvorrichtung ein gegensinniges Verschwenken der Räder zumindest teilweise gestattet, können sich die Räder so an den Untergrund anpassen, wie dies auch bei dem in der EP 2 835 044 A1 gezeigten Fahrzeug möglich ist.

Es kann vorgesehen sein, dass die Stellvorrichtung eine Verstellvorrichtung umfasst, durch welche die Räder aktiv gegensinnig verschwenkbar sind.

Bevorzugt verlaufen die Schwenkachsen wenigstens annähernd parallel in Bezug auf die Fahrtrichtung des Fahrzeugs.

Bevorzugt verlaufen die Schwenkachsen wenigstens annähernd rechtwinklig zur Fahrzeugachse.

Besonders bevorzugt ist am Fahrzeug eine Mähvorrichtung angeordnet.

Es ist das Fahrzeug als einachsiges Fahrzeug ausgebildet.

Bevorzugt ist das Fahrzeug als landwirtschaftliches Fahrzeug ausgebildet.

Die wenigstens eine Koppelungsvorrichtung kann auf verschiedene Arten ausgebildet sein:
- mechanische Ausbildung (bevorzugt in Form eines Hebelwerks, Seilzugs oder Spindeltriebs)
- Ausbildung als Hydraulik- oder Pneumatikvorrichtung

Die mechanische Ausbildung und die Ausbildung als Hydraulik- oder Pneumatikvorrichtung haben beide den Vorteil, für ihre Funktion keinerlei Energie zu benötigen.

Bei der mechanischen Ausbildung bzw. der Ausbildung als Hydraulik- oder Pneumatikvorrichtung können in einer bevorzugten Ausführungsform eine oder zwei Koppelungsvorrichtungen vorgesehen sein:
- eine erste Koppelungsvorrichtung, welche am ersten Rad oberhalb des zwischen erstem Rad und Fahrzeugachse angeordneten Gelenks und am zweiten Rad unterhalb des zwischen zweitem Rad und Fahrzeugachse angeordneten Gelenks angreift und/oder
- eine zweite Koppelungsvorrichtung, welche am ersten Rad unterhalb des zwischen erstem Rad und Fahrzeugachse angeordneten Gelenks und am zweiten Rad oberhalb des zwischen zweitem Rad und Fahrzeugachse angeordneten Gelenks angreift

Das erste und das zweite Rad wirken bei gleichsinnigen Verschwenkungen also gegeneinander und sperren sich so.

Bei einem bevorzugten Ausführungsbeispiel des Fahrzeugs ist vorgesehen, dass - vorzugsweise die Räder als Stachelwalzen ausgebildet sind und - an oder neben den Rädern eine gesonderte Lauffläche, vorzugsweise aus Gummi, angeordnet ist, wobei die Räder in einem aus der Horizontale gegensinnig verschwenkten Zustand den Untergrund über die gesonderten Laufflächen kontaktieren. Insbesondere bei der Ausbildung der Räder als Stachelwalzen schont diese Ausführung die Stacheln bei Fahrten auf hartem Untergrund (z. B. Asphalt). Die Stellvorrichtung kann in diesem Ausführungsbeispiel z. B. in Form eines Schwenkhebels ausgebildet sein, über welchen ein Rad über beide Räder manuell oder motorisch hoch gehoben werden können. Die Räder selbst können eine profilierte Ausbildung haben.

Besonders bevorzugt ist ein Ausführungsbeispiel der Erfindung, bei welchem die Räder oder die wenigstens eine Fahrzeugachse jeweils
- entweder verschiebbar und vorzugsweise schwenkbar an einer Führung gelagert sind, wobei vorzugsweise die Führungen entlang der Schwenkachsen verlaufen oder
- an einem Hebel entlang eines Bogens verschwenkbar gelagert sind.

Dies gestattet eine Veränderung der Schwerpunktslage des Fahrzeugs. Bei den Ausführungsbeispielen mit Führungen können diese die Schwenklager für die Schwenkachsen bilden.

Ausführungsbeispiele der Erfindung werden anhand der Figuren diskutiert. Es zeigen:
- Fig. 1a - 1c: verschiedene Ansichten eines als einachsiges Fahrzeug ausgebildeten erfindungsgemäßen Fahrzeugs
- Fig. 2a, 2b: eine Vorderansicht und eine perspektivische Ansicht eines nicht erfindungsgemäßen Fahrzeugs
- Fig. 3a, 3b: eine Vorderansicht und eine perspektivische Ansicht eines erfindungsgemäßen Fahrzeugs beim Durchfahren einer Mulde bzw. bei aktiver Verstellvorrichtung
- Fig. 4a, 4b: eine Vorderansicht und eine perspektivische Ansicht eines erfindungsgemäßen Fahrzeugs beim Überfahren einer Kuppe
- Fig. 5a, 5b: hydraulische Schaltbilder zweier Ausführungsbeispiele der Koppelungsvorrichtung und der Verstellvorrichtung
- Fig. 6a, 6b: eine Detailansicht eines erfindungsgemäßen Fahrzeugs mit einer Koppelungsvorrichtung nach der Fig. 5a oder 5b in unverschwenkter bzw. verschwenkter Stellung des Rads
- Fig. 7a, 7b: eine Detailansicht eines erfindungsgemäßen Fahrzeugs mit einer Koppelungsvorrichtung nach der Fig. 5b in unverschwenkter bzw. verschwenkter Stellung des Rads
- Fig. 8: eine Ansicht eines Ausführungsbeispiels der Stellvorrichtung
- Fig. 9: eine Ansicht eines Ausführungsbeispiels einer elektromechanischen Koppelung (nicht erfindungsgemäß)
- Fig. 10: eine Ansicht eines Ausführungsbeispiels einer mechanischen Koppelung
- Fig. 11a, 11b: Ansichten eines weiteren Ausführungsbeispiels der Erfindung
- Fig. 12a-d: eine Draufsicht auf weitere Ausführungsbeispiele der Erfindung

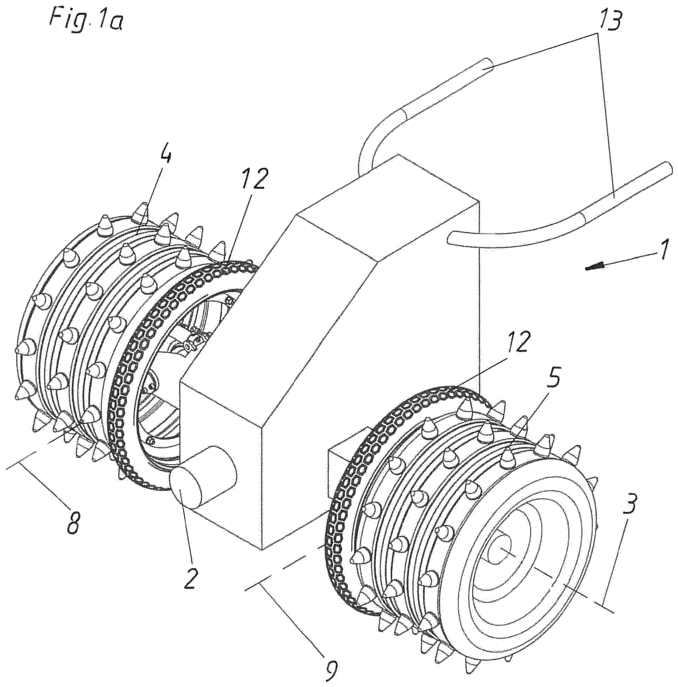

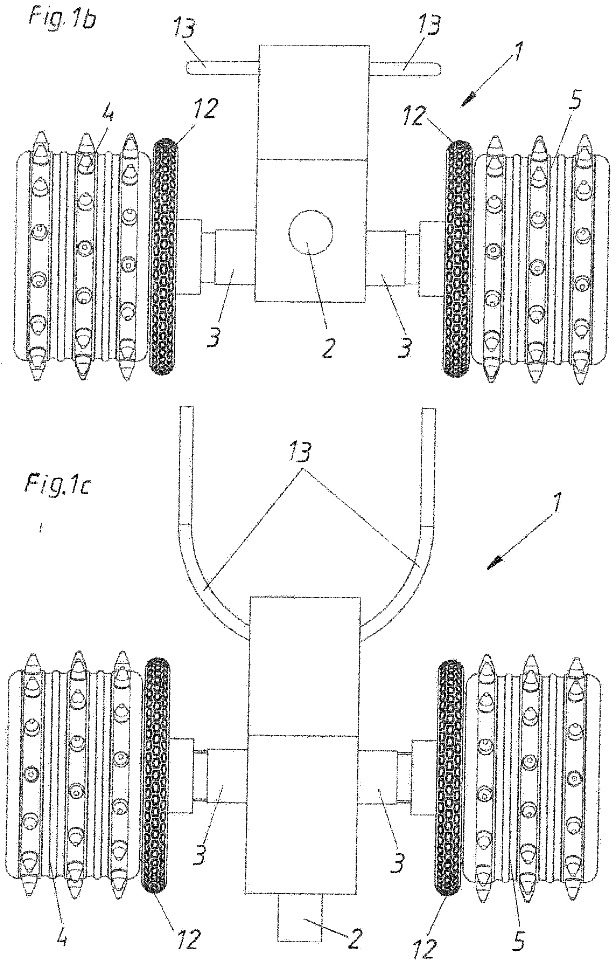

Fig. 1a - 1c zeigen ein erfindungsgemäßes Fahrzeug 1 in verschiedenen Ansichten (1a: perspektivische Ansicht, 1b: Frontansicht, 1c: Draufsicht von oben). Das Fahrzeug 1 ist beispielhaft als landwirtschaftliches, einachsiges Fahrzeug ausgebildet.

Im gezeigten Ausführungsbeispiel weist das Fahrzeug 1 zwei motorisch angetriebene Räder 4, 5 auf und kann über Handgriffe 13 geführt werden. Über eine Anschlussvorrichtung 2 können Anbaugeräte (wie z. B. eine Mähvorrichtung) mit dem Fahrzeug 1 verbunden und so vom Fahrzeug 1 angetrieben werden. Es kann je nach Ausführung der Anschlussvorrichtung 2 auch möglich sein, Energie an das Anbaugerät zu übermitteln. Beispielsweise kann die Anschlussvorrichtung 2 eine motorisch angetriebene Welle, elektrische Anschlüsse oder Hydraulikanschlüsse aufweisen.

Die beiden Räder 4, 5 sind jeweils über ein Gelenk 6, 7 an der Fahrzeugachse 3 schwenkbar um Schwenkachsen 8, 9 gelagert. Die Schwenkachsen 8, 9 verlaufen quer zur Fahrzeugachse 3 (wenigstens annähernd parallel zur Fahrtrichtung) und wenigstens annähernd horizontal (bei horizontaler Ausrichtung des Fahrzeugs 1). In den Fig. 1a - 1c ist der unverschwenkte Zustand der Räder 4, 5 dargestellt.

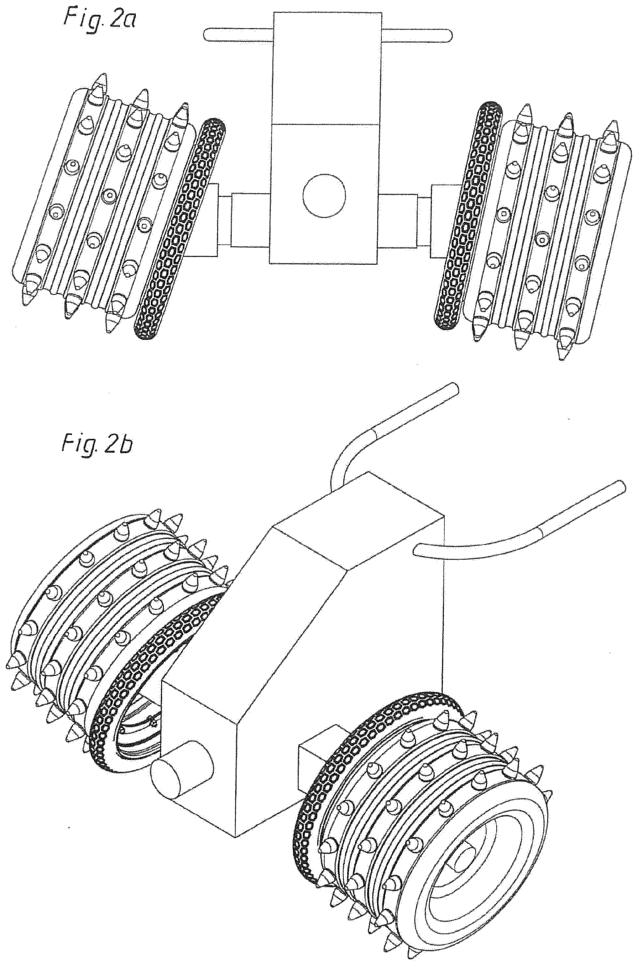

Fig. 2a und 2b zeigen ein Problem, welches beim Fahrzeug 1 auftreten würde, wenn keine Stellvorrichtung mit einer Koppelungsvorrichtung vorgesehen wäre, welche ein gleichsinniges Verschwenken der Räder 4, 5 verhindert. Bei einem solchen Fahrzeug kann es bei einer Fahrt entlang eines Hanges oder Berges, so, dass sich das eine Rad bergseitig und das andere Rad talseitig befindet, durch den Einfluss der Schwerkraft zu dem gezeigten, unerwünschten Verschwenken beider Räder 4,5 in Richtung des Tales kommen. Es ist zu beachten, dass die Oberfläche des Hanges in der Darstellung der Fig. 2a und 2b horizontal ausgerichtet wurde. In Fig. 2a und 2b entspricht "bergseitig" der Richtung "links" und "talseitig" der Richtung "rechts". Das gezeigte gleichsinnige Verschwenken beider Räder 4, 5 wird - wie anhand verschiedener Ausführungsbeispiele zu den folgenden Figuren erläutert werden wird - durch die erfindungsgemäße Koppelungsvorrichtung verhindert.

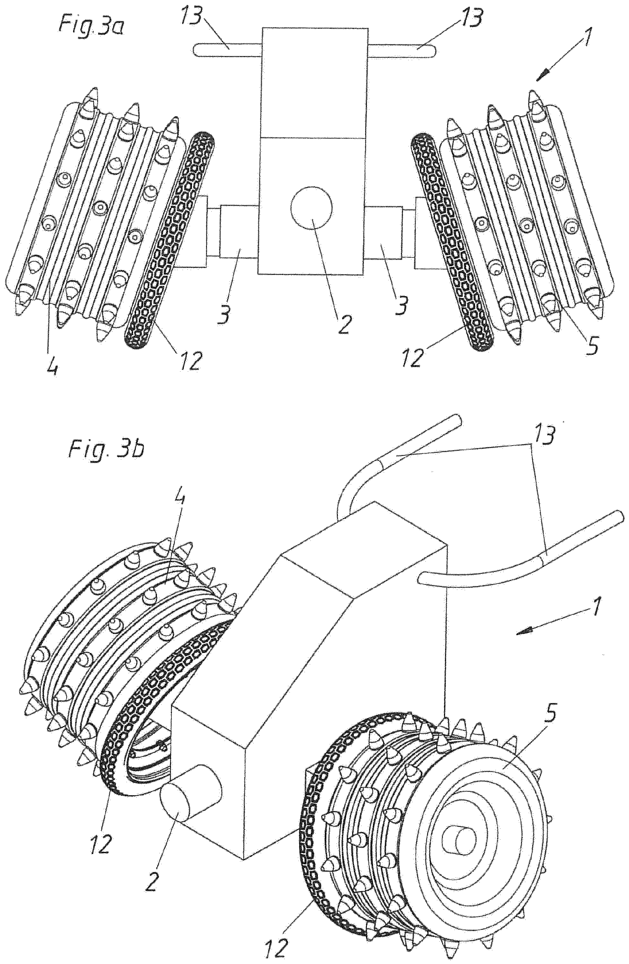

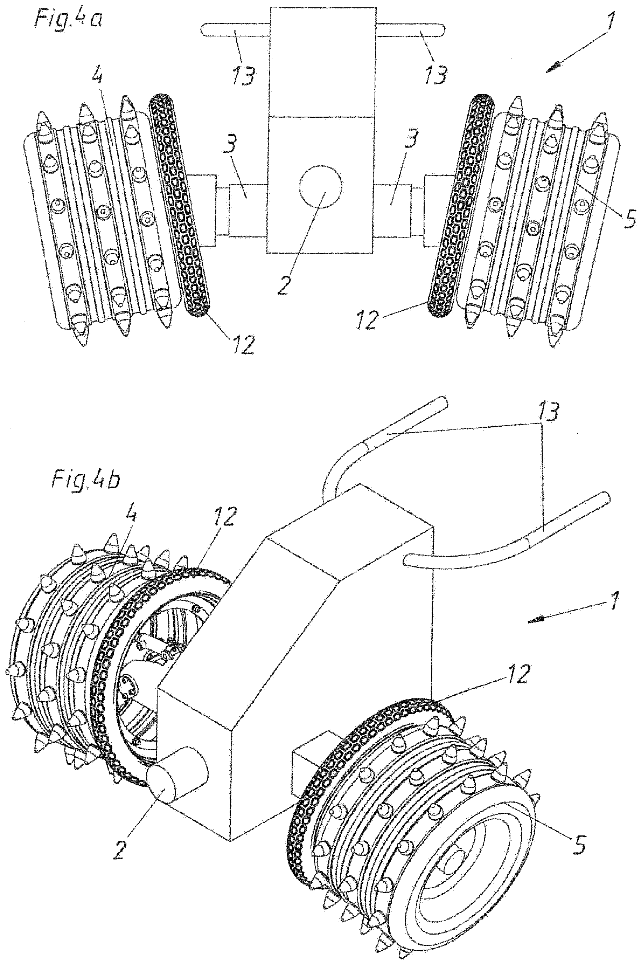

Die Fig. 3a und 3b zeigen, dass die erfindungsgemäße Stellvorrichtung ein gegensinniges Verschwenken der Räder 4, 5 zulässt, so dass eine Anpassung an den Untergrund erfolgen kann. In den Fig. 3a und 3b verschwenken beide Räder 4, 5 gegensinnig so, dass sich ihre oberen Bereiche aneinander annähern und sich ihre unteren Bereiche voneinander entfernen. Diese Situation tritt z. B. beim Befahren einer Oberfläche auf, die ausgehend vom Zentrum des Fahrzeuges 1 in Richtung beider Räder 4, 5 ansteigt. Die Fig. 4a und 4b zeigen die entsprechende Situation, wenn z. B. eine Oberfläche befahren wird, welche ausgehend vom Zentrum des Fahrzeuges 1 in Richtung beider Räder 4, 5 abfällt. Hier verschwenken beide Räder 4, 5 gegensinnig so, dass sich ihre oberen Bereiche voneinander entfernen und sich ihre unteren Bereiche aneinander annähern.

Je nach Konstruktion der Koppelungsvorrichtung oder je nach Beschaffenheit der befahrenen Oberfläche kann es - anders als in den Fig. 3 und 4 dargestellt - natürlich auch möglich sein, dass das gegensinnige Verschwenken der Räder 4, 5 unterschiedlich stark erfolgt.

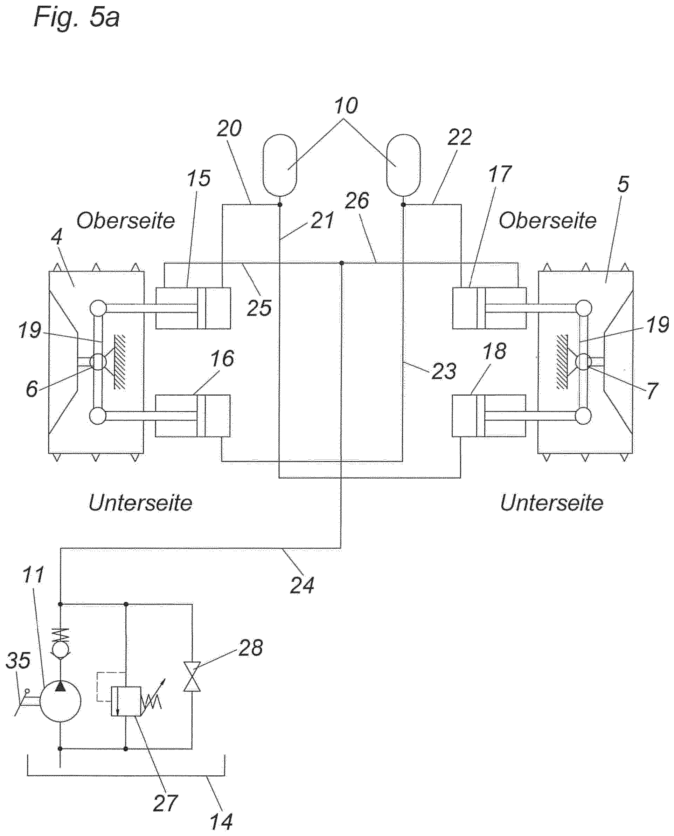

Fig. 5a zeigt ein Ausführungsbeispiel einer als Hydraulikvorrichtung ausgebildeten Koppelungsvorrichtung (eine Ausbildung als Pneumatikvorrichtung wäre natürlich auch möglich). Hier besteht die Koppelungsvorrichtung aus den Bauteilen:
- Kolbenseite der oberen Kolben-Zylinder-Einheit 15 des ersten Rads 4
- Kolbenseite der unteren Kolben-Zylinder-Einheit 16 des ersten Rads 4
- Kolbenseite der oberen Kolben-Zylinder-Einheit 17 des zweiten Rads 5
- Kolbenseite der unteren Kolben-Zylinder-Einheit 18 des zweiten Rads 5
- erste Verbindungsleitung mit den Zweigen 20 und 21
- zweite Verbindungsleitung mit den Zweigen 22 und 23
- Druckspeicher 10

In diesem Ausführungsbeispiel ist zusätzlich eine hydraulisch ausgebildete Verstellvorrichtung vorgesehen (eine Ausbildung als Pneumatikvorrichtung wäre natürlich auch möglich), durch welche die Räder 4, 5 aktiv gegensinnig verschwenkbar sind. Hier besteht die Verstellvorrichtung aus den Bauteilen:
- Hydraulikpumpe 11
- Öltank 14
- Förderleitung 24
- Verteilerleitung mit Zweigen 25 und 26
- Überdruckventil 27
- Ventil 28
- Stangenseite der oberen Kolben-Zylinder-Einheit 15 des ersten Rads 4
- Stangenseite der oberen Kolben-Zylinder-Einheit 17 des zweiten Rads 5

Zur Funktionsweise der Koppelungsvorrichtung:
Im gezeigten Ausführungsbeispiel sind eine erste und eine zweite Koppelungsvorrichtung vorgesehen, die an sich unabhängig voneinander funktionieren, d. h. bei Druckabfall in einer der beiden Koppelungsvorrichtungen, würde die andere Koppelungsvorrichtung immer noch die geforderte Funktion erfüllen, ein gleichsinniges Verschwenken der Räder 4, 5 zu verhindern und ein gegensinniges Verschwenken der Räder 4, 5 zu gestatten. Es ist an sich auch nicht unbedingt erforderlich, beide Koppelungsvorrichtungen gemeinsam vorzusehen.

Die Funktionsweise wird anhand der ersten Koppelungsvorrichtung (Kolbenseite der oberen Kolben-Zylinder-Einheit 15 des ersten Rads 4, Zweige 20 und 21 der ersten Verbindungsleitung, Kolbenseite der unteren Kolben-Zylinder-Einheit 18 des zweiten Rads 5, optionaler Druckspeicher 10) erläutert. Die zweite Koppelungsvorrichtung (Kolbenseite der oberen Kolben-Zylinder-Einheit 17 des ersten Rads 5, Zweige 22 und 23 der zweiten Verbindungsleitung, Kolbenseite der unteren Kolben-Zylinder-Einheit 16 des ersten Rads 4, optionaler Druckspeicher 10) funktioniert analog.

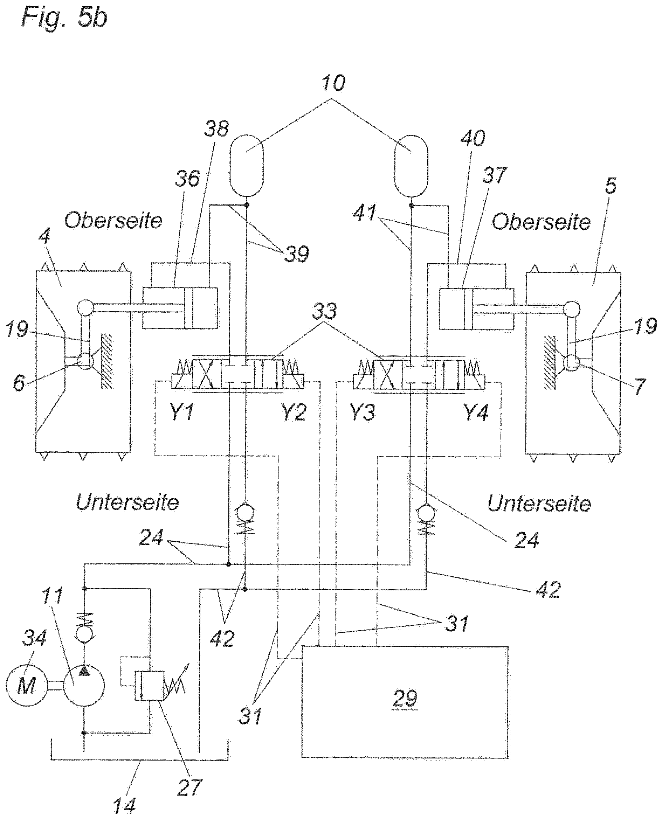

Steht das Fahrzeug 1 wie in Fig. 2 gezeigt in einem Hang, wirkt aufgrund der Schwerkraft ein Drehmoment auf die Räder 4, 5, welches ohne die Koppelungsvorrichtungen ein gleichsinniges Verschwenken der Räder 4, 5 (in Fig. 5 im Uhrzeigersinn) bewirken würde. Durch die Schwerkraft übt das erste Rad 4 in diesem Fall mit seiner Oberseite über den optionalen Lenker 19 (es könnte auch eine andere Anbindung an das Rad 4 erfolgen, zum Beispiel könnte die Kolbenstange unmittelbar am Rad - zum Beispiel über ein Gelenk - befestigt sein) einen Druck auf die Kolbenstange und damit den Kolben der Kolben-Zylinder-Einheit 15 aus. Hierdurch wird das sich auf der Kolbenseite im Kolbenraum der Kolben-Zylinder-Einheit 15 befindliche Öl mit einem Druck beaufschlagt, der sich über die Zweige 20 und 21 der ersten Verbindungsleitung auf die Kolbenseite und damit den Kolben der Kolben-Zylinder-Einheit 18 überträgt. Das zweite Rad 5 wird ebenfalls durch die Schwerkraft mit einem Drehmoment beaufschlagt, sodass es mit seiner Unterseite über den optionalen Lenker 19 einen Druck auf die Kolbenstange und damit den Kolben der Kolben-Zylinder-Einheit 18 ausübt. Dieser Druck wirkt jenem Druck entgegen, der von der Oberseite des ersten Rads 4 ausgeübt wird. Dies führt zu der gewünschten Stabilisierung gegen ein gleichsinniges Verschwenken der Räder 4, 5 (im diskutierten Fall im Uhrzeigersinn). Natürlich kann es sein, dass die beiden Drücke nicht gleich groß sind, z. B. weil die Belastung der Räder 4, 5 oder die Reibungskraft mit dem Untergrund unterschiedlich ist. Ein geringfügiges gleichsinniges Verschwenken der Räder 4, 5 kann daher nicht ausgeschlossen werden, ist aber akzeptabel. Ein inakzeptabel großes gleichsinniges Verschwenken ist aber verhindert.

Anstelle der gezeigten zwei einfach wirkenden Kolben-Zylinder-Einheiten 15 - 18 pro Koppelungsvorrichtung könnte auch eine einzige doppeltwirkende Kolben-Zylinder-Einheit vorgesehen sein. Ein entsprechendes Ausführungsbeispiel ist in Fig. 5b dargestellt.

Für die Funktionsweise der beschriebenen Koppelungsvorrichtung könnten die Stangenseiten aller (einfach wirkenden) Kolben-Zylinder-Einheiten 15 - 18 an sich frei von Öl sein. Im vorliegenden Beispiel ist allerdings über die Stangenseiten der oberen Kolben-Zylinder-Einheiten 15 und 17 eine Verstellvorrichtung realisiert und diese können daher mit unter Druck stehendem Öl befüllt werden.

Zur Funktionsweise der Verstellvorrichtung:
Zur Aktivierung der Verstellvorrichtung wird die Hydraulikpumpe 11 betätigt. Diese pumpt Öl (hier aus einem Öltank 14) über die Förderleitung 24und die beiden Zweige 25 und 26 der Verteilerleitung in die Stangenseiten der oberen Kolben-Zylinder-Einheiten 15 und 17. Dadurch verschwenken die beiden Räder 4, 5 gegensinnig (das Rad 4 im Uhrzeigersinn, das Rad 5 gegen den Uhrzeigersinn). Dies ist vor allem dann sinnvoll, wenn, wie in den Figuren dargestellt eine gesonderte Lauffläche 12 (z. B. aus Gummi) vorgesehen ist. Im verschwenkten Zustand laufen die Räder 4, 5 nur über die gesonderte Lauffläche 12, nicht über die ggf. mit Stacheln versehene restliche Lauffläche, was insbesondere bei einer Straßenfahrt vorteilhaft ist. Über das Ventil 28 kann das Öl in den Öltank 14 abgelassen werden, die Räder 4, 5 kehren in die in Fig. 5 dargestellte horizontale Stellung zurück. In dieser Stellung berühren die Räder 4, 5 den Untergrund über die restliche Lauffläche. Als Sicherheitsmerkmal ist optional ein Überdruckventil 27 vorgesehen. Die Hydraulikpumpe 11 kann über eine Handpumpe 35 und/oder über einen Motor 34 angetrieben werden.

Die Verstellvorrichtung kann unabhängig von der Koppelungsvorrichtung ausgebildet sein.

Das Ausführungsbeispiel der Fig. 5b verwendet doppeltwirkende Kolben-Zylinder-Einheiten 36, 37 und Proportionalventile 33, die durch eine Steueroder Regeleinrichtung 29 steuerbar oder regelbar ist. In der in Fig. 5b dargestellten Stellung der Proportionalventile 33 sind die beiden Räder 4, 5 in der waagrechten Stellung gesperrt. Steuert die Steuer- oder Regeleinrichtung 29 die Proportionalventile 33 so, dass die Stangenseiten der doppeltwirkenden Kolben-Zylinder-Einheiten 36, 37 mit der Förderleitung 24 verbunden sind und die Kolbenseiten der doppeltwirkenden Kolben-Zylinder-Einheiten 36, 37 mit der Abflussleitung 42 verbunden sind (Proportionalventile sind ganz nach links verschoben), realisiert die Stellvorrichtung die Verstellvorrichtung, durch welche die Räder 4, 5 aktiv gegensinnig verschwenkbar sind. Steuert die Steuer- oder Regeleinrichtung 29 die Proportionalventile 33 so, dass die Stangenseiten der doppeltwirkenden Kolben-Zylinder-Einheiten 36, 37 mit der Abflussleitung 42 verbunden sind und die Kolbenseiten der doppeltwirkenden Kolben-Zylinder-Einheiten 36, 37 mit der Förderleitung 24 verbunden sind, realisiert die Stellvorrichtung die Koppelungsvorrichtung über welche die Räder 4, 5 derart miteinander gekoppelt sind, dass ein gleichsinniges Verschwenken der Räder 4, 5 zumindest teilweise verhindert und ein gegensinniges Verschwenken der Räder 4, 5 zumindest teilweise gestattet wird. Die Steuer- oder Regeleinrichtung 29 berücksichtigt dabei die aufgrund der unterschiedlichen Flächen der Kolben- und der Stangenseiten der doppeltwirkenden Kolben-Zylinder-Einheiten 36, 37 auftretenden unterschiedlichen Kräfte.

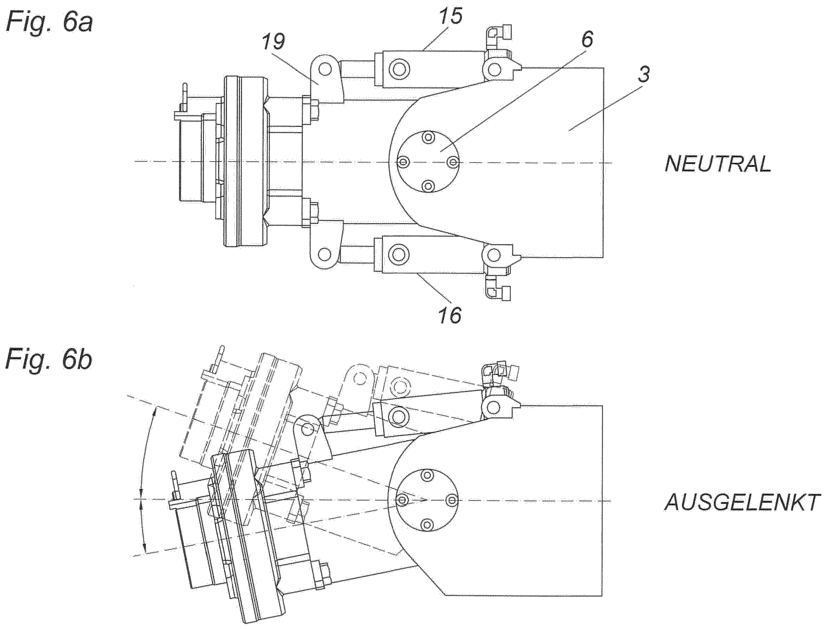

Fig. 6 zeigt die Fahrzeugachse 3, das Gelenk 3, den Lenker 19 und die beiden Kolben-Zylinder-Einheiten 15, 16 des oben diskutierten Ausführungsbeispiels nach Fig. 5a, wobei das Rad 4 demontiert wurde, in unverschwenkter Stellung (Fig. 6a) bzw. in verschwenkter Stellung (Fig. 6b). In Fig. 6b wurde aus Gründen der Übersichtlichkeit die untere Kolben-Zylinder-Einheit 16 nicht dargestellt.

Statt der in den Fig. 5 und 6 gezeigten hydraulischen Bauweise könnte auch eine pneumatische Bauweise oder eine Kombination aus hydraulischer oder pneumatischer Bauweise vorgesehen sein.

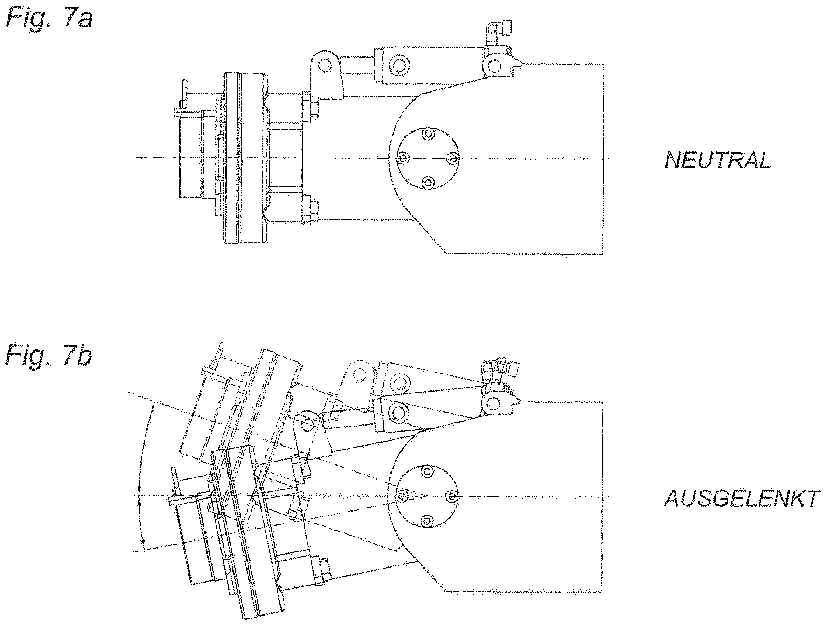

Fig. 7 zeigt die Fahrzeugachse 3, das Gelenk 3, den Lenker 19 und die beiden Kolben-Zylinder-Einheiten 15, 16 des oben diskutierten Ausführungsbeispiels nach Fig. 5b, wobei das Rad 4 demontiert wurde, in unverschwenkter Stellung (Fig. 7a) bzw. in verschwenkter Stellung (Fig. 5b).

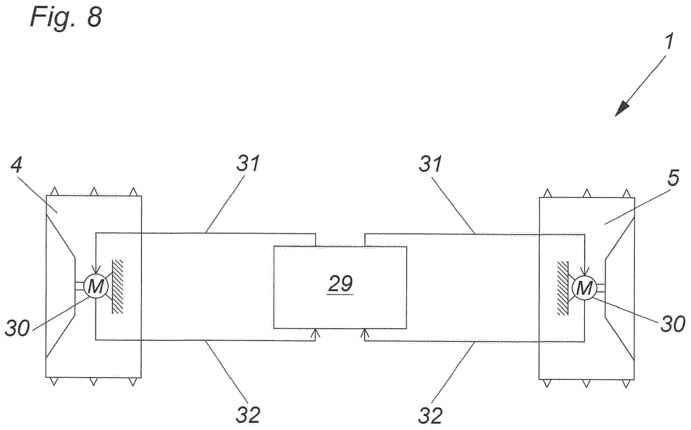

Fig. 8 zeigt eine Ansicht eines Ausführungsbeispiels der Stellvorrichtung in Form einer Kombination aus einer Steuer- oder Regeleinrichtung 29 und Stellmotoren 30 (z. B. Hydraulikzylinder, Pneumatikzylinder). Mit den Stellmotoren 30 sind Sensoren verbunden, welche über die Signalleitungen 32 den Verschwenkzustand jedes Rades 4, 5 an die Steuer- oder Regeleinrichtung 29 melden. Diese kann über die Befehlsleitungen 31 Steuerbefehle an die Stellmotoren 30 übermitteln. Daneben können beliebige weitere Funktionalitäten realisiert werden (z. B. Sperren des Verschwenkens der Räder 4, 5; elektronisch gesteuertes Dämpfen des Verschwenkens), da die Steuer- oder Regeleinrichtung 29 die Räder 4, 5 einzeln oder aufeinander abgestimmt in beliebiger Weise ansteuern kann. Im gezeigten Ausführungsbeispiel übernehmen die Stellmotoren 30 auch die Funktion der in den anderen Figuren dargestellten Gelenke 6, 7. Dies ist aber nicht unbedingt erforderlich. Stattdessen können die Stellmotoren 30 auch zusätzlich zu den Gelenken 6, 7 vorgesehen sein.

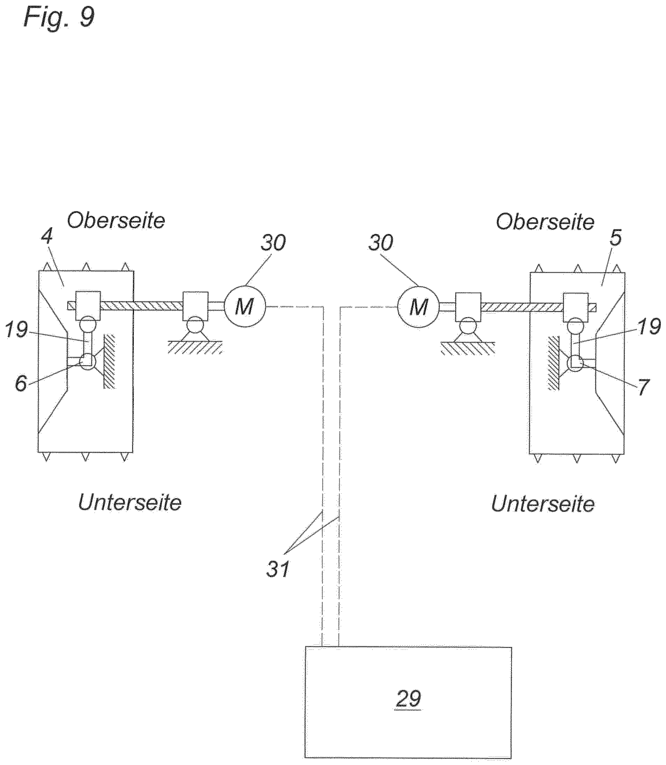

Fig. 9 zeigt eine Ansicht eines nicht erfindungsgemäßen Ausführungsbeispiels einer elektromechanischen Koppelung unter Verwendung von Spindeltrieben.

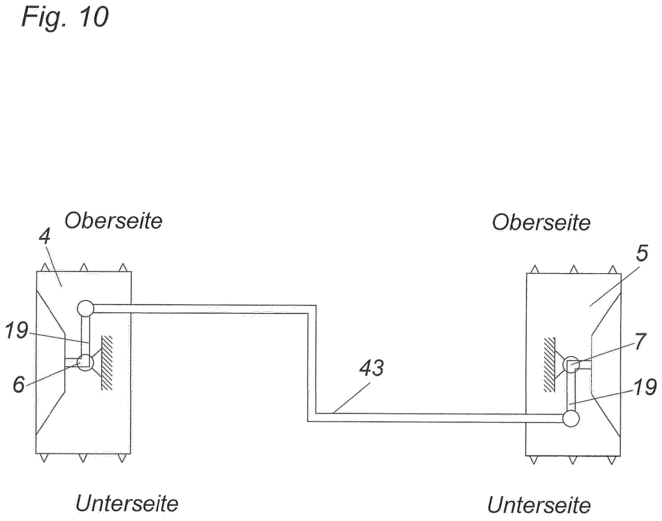

Fig. 10 zeigt eine Ansicht eines Ausführungsbeispiels einer mechanischen Koppelung unter Verwendung eines Hebelwerkes 43.

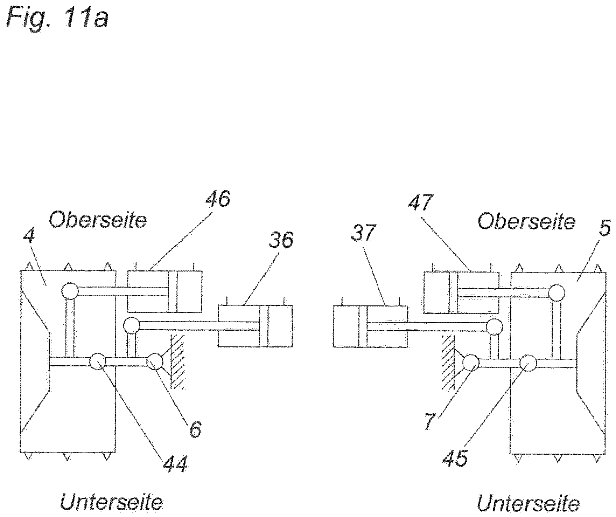

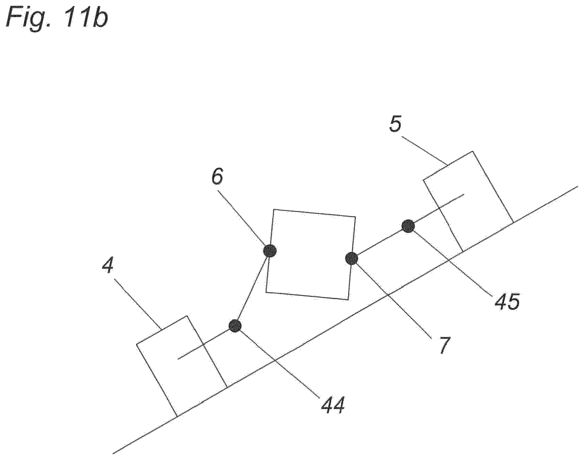

Fig. 11a zeigt ein Ausführungsbeispiel, bei welchem die Räder 4, 5 über Gelenke 6, 7 und weitere Gelenke 44, 45 gelagert sind. Pro Rad 4, 5 sind zwei doppeltwirkende Kolben- Zylinder-Einheiten 36, 37, 46, 47 vorgesehen, die nach Art der Fig. 5b durch eine Steuer- oder Regeleinrichtung 29 und Proportionalventile 33 gesteuert oder geregelt werden. Wie in Fig. 11b dargestellt, kann bei diesem Ausführungsbeispiel erreicht werden, dass der über die Räder 4, 5 am Untergrund abstützende Teil des Fahrzeugs 1 auch in einer Hanglage des Fahrzeugs 1 waagrecht bleibt.

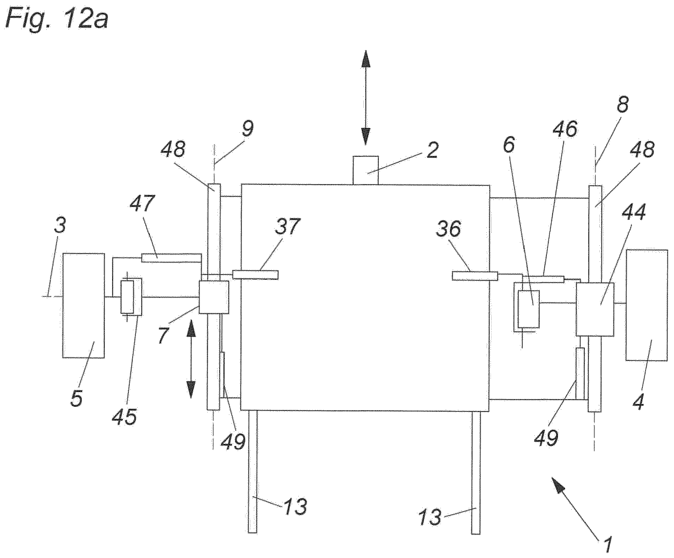

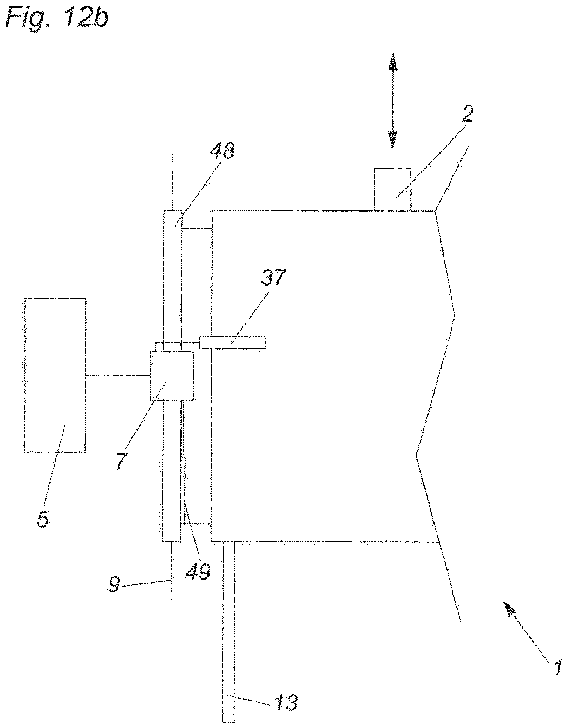

Fig. 12a zeigt ein Ausführungsbeispiel gemäß der Fig. 11, bei welchem die Räder 4, 5 jeweils verschiebbar an einer mit rundem Querschnitt ausgebildeten Führung 48 gelagert sind, wobei die Führungen 48 entlang der Schwenkachsen 8, 9 verlaufen. Fig. 12b zeigt dieselbe Situation für ein Fahrzeug 1, bei welchem zwischen den Rädern 4, 5 und der Fahrzeugachse 3 jeweils nur ein Gelenk 6, 7 angeordnet ist.

Die Verschiebbarkeit der Räder 4, 5 gestattet eine Veränderung der Schwerpunktslage des Fahrzeugs 1.

Die Stellvorrichtung umfasst in diesen Ausführungsbeispielen Kolben-Zylinder-Einheiten (gezeigt sind beispielhaft die Kolben-Zylinder-Einheit 36, 37, 46, 47) gemäß den weiter oben diskutierten Ausführungsbeispielen, welche mit den Rädern 4, 5 mitfahrend an den Führungen 48 gelagert sind. Alternativ zur mitfahrenden Ausbildung könnte die Stellvorrichtung auch feststehend aber schwenkbar am Fahrzeug 1 gelagert sein.

In Fig. 12a zeigen die rechte und die linke Hälfte verschiedene Variante. Die Führungen 48 sind mit rundem Querschnitt ausgebildet, sodass die Schwenkachsen 8, 9 entlang der Führungen 48 verlaufen. Bei der in der linken Hälfte der Fig. 12a gezeigten Variante ist das innere Gelenk 7 in Form einer Muffe ausgebildet und verschiebbar (über einen Linearantrieb 49) an einer Führung 48 gelagert. Bei der in der rechten Hälfte der Fig. 12a gezeigten Variante ist das äußere Gelenk 44 als Muffe ausgebildet und verschiebbar (über einen Linearantrieb 49) an einer Führung 48 gelagert. Die Führungen 48 stellen somit die Schwenklager dar.

In Fig. 12b ist nur jeweils ein Gelenk 7 (nur die linke Seite des Fahrzeugs 1 ist dargestellt, dieses ist aber symmetrisch ausgebildet) zwischen Drehachse 3 und Rad 4, 5 vorgesehen, welches als Muffe ausgebildet und entlang einer mit rundem Querschnitt ausgebildeten Führung 48 (hier durch einen Linearantrieb 49) verschiebbar gelagert ist. Die Führungen 48 verlaufen entlang der Schwenkachsen 9. Die Führungen 48 stellen somit die Schwenklager dar.

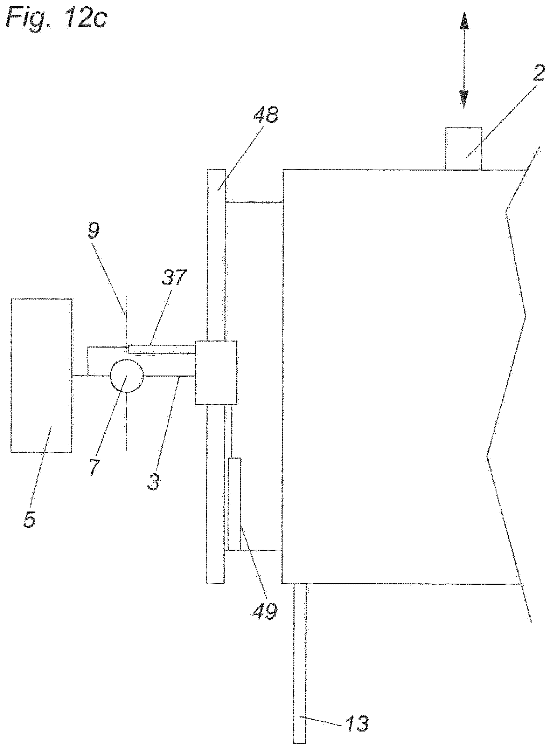

Fig. 12c zeigt eine Variante, bei welcher die Fahrzeugachse 3 verschiebbar entlang einer Führung 48 (hier durch einen Linearantrieb 49) angeordnet ist. Die Führung 48 ist hier mit einem unrunden oder runden Querschnitt ausgebildet.

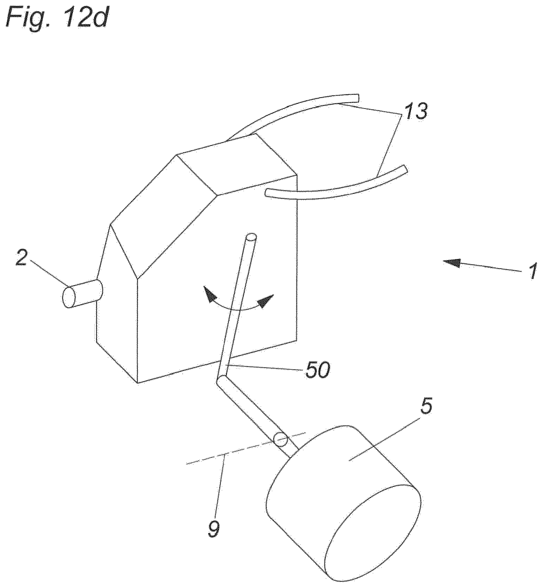

Anders als in den Fig. 12a bis 12c gezeigt, könnte auch vorgesehen sein, dass die Räder 4, 5 oder die wenigstens eine Fahrzeugachse 3 an einem Hebel 50 entlang eines Bogens verschwenkbar gelagert sind (vgl. Fig. 12d, nur eine Seite des Fahrzeugs 1 ohne Rad ist dargestellt).

### Bezugszeichenliste:

- 1: Fahrzeug
- 2: Anschlussvorrichtung für Anbaugeräte
- 3: Fahrzeugachse
- 4: erstes Rad
- 5: zweites Rad
- 6: Gelenk zwischen erstem Rad und Fahrzeugachse
- 7: Gelenk zwischen zweitem Rad und Fahrzeugachse
- 8: Schwenkachse des ersten Rades
- 9: Schwenkachse des zweiten Rades
- 10: Druckspeicher
- 11: Hydraulikpumpe der Verstellvorrichtung
- 12: gesonderte Lauffläche
- 13: Handgriffe
- 14: Öltank
- 15: obere Kolben-Zylinder-Einheit des ersten Rads
- 16: untere Kolben-Zylinder-Einheit des ersten Rads
- 17: obere Kolben-Zylinder-Einheit des zweiten Rads
- 18: untere Kolben-Zylinder-Einheit des zweiten Rads
- 19: Lenker
- 20: Zweig der ersten Verbindungsleitung
- 21: Zweig der ersten Verbindungsleitung
- 22: Zweig der zweiten Verbindungsleitung
- 23: Zweig der zweiten Verbindungsleitung
- 24: Förderleitung
- 25: Zweig der Verteilerleitung
- 26: Zweig der Verteilerleitung
- 27: Überdruckventil
- 28: Ventil
- 29: Steuer- oder Regeleinrichtung
- 30: Stellmotor
- 31: Befehlsleitung
- 32: Signalleitung des Winkelgebers
- 33: Schaltventil
- 34: Motor für Ölpumpe
- 35: Handhebel
- 36: doppeltwirkende Kolben-Zylinder-Einheit des ersten Rads
- 37: doppeltwirkende Kolben-Zylinder-Einheit des zweiten Rads
- 38: stangenseitige Leitung der doppeltwirkende Kolben-Zylinder-Einheit des ersten Rads
- 39: kolbenseitige Leitung der doppeltwirkende Kolben-Zylinder-Einheit des ersten Rads
- 40: stangenseitige Leitung der doppeltwirkende Kolben-Zylinder-Einheit des zweiten Rads
- 41: kolbenseitige Leitung der doppeltwirkende Kolben-Zylinder-Einheit des zweiten Rads
- 42: Abflussleitung
- 43: Hebelwerk
- 44: weiteres Gelenk zwischen erstem Rad und Fahrzeugachse
- 45: weiteres Gelenk zwischen zweitem Rad und Fahrzeugachse
- 46: weitere doppeltwirkende Kolben-Zylinder-Einheit des ersten Rads
- 47: weitere doppeltwirkende Kolben-Zylinder-Einheit des zweiten Rads
- 48: Führung
- 49: Linearantrieb
- 50: Hebel

## Patentansprüche

1. Fahrzeug (1) mit einer Anschlussvorrichtung (2) für Anbaugeräte und einer Fahrzeugachse (3), an welcher ein erstes und ein zweites Rad (4, 5) drehbar gelagert sind, wobei zwischen jedem Rad (4, 5) und der Fahrzeugachse (3) wenigstens ein Gelenk (6, 7) vorgesehen ist, welches ein Verschwenken jedes Rades (4, 5) um eine Schwenkachse (8, 9) gestattet, die quer zur Fahrzeugachse (3) und wenigstens annähernd horizontal verläuft und wobei durch ein gegensinniges Verschwenken der Räder (4, 5) eine Anpassung der Räder (4,5) an einen Untergrund erfolgt und wobei eine Stellvorrichtung vorgesehen ist, durch welche das Verschwenken der Räder (4, 5) um die Schwenkachsen (8, 9) beeinflussbar ist, **dadurch gekennzeichnet, dass**
- das Fahrzeug (1) als einachsiges Fahrzeug ausgebildet ist und dass
- die Stellvorrichtung wenigstens eine Koppelungsvorrichtung aufweist, welche mechanisch, als Hydraulikvorrichtung oder als Pneumatikvorrichtung ausgebildet ist und
- die Räder (4, 5) über die wenigstens eine Koppelungsvorrichtung derart miteinander gekoppelt sind, dass
• die Koppelungsvorrichtung ein unerwünschtes gleichsinniges Verschwenken der Räder (4, 5) unter dem Einfluss der Schwerkraft zumindest teilweise verhindert, weil das erste und das zweite Rad bei gleichsinnigen Verschwenkungen über die wenigstens eine mechanisch, als Hydraulikvorrichtung oder als Pneumatikvorrichtung ausgebildete Koppelungsvorrichtung gegeneinander wirken und sich so sperren und dass
• die Koppelungsvorrichtung das gegensinnige Verschwenken der Räder (4, 5) zur Anpassung an den Untergrund zumindest teilweise zulässt.

2. Fahrzeug nach Anspruch 1, wobei die Stellvorrichtung eine Steuer- oder Regelungseinrichtung umfasst.

3. Fahrzeug nach Anspruch 1, wobei die wenigstens eine Koppelungsvorrichtung mechanisch als Hebelwerk, Seilzug oder Spindeltrieb, ausgebildet ist.

4. Fahrzeug nach Anspruch 1, wobei die wenigstens eine Koppelungsvorrichtung einen Druckspeicher (10), vorzugsweise einen Blasenspeicher, aufweist.

5. Fahrzeug nach wenigstens einem der Ansprüche 1 bis 4, wobei die wenigstens eine Koppelungsvorrichtung umfasst:
- eine erste Koppelungsvorrichtung, welche am ersten Rad (4) oberhalb des zwischen erstem Rad (4) und Fahrzeugachse (3) angeordneten Gelenks (6) und am zweiten Rad (5) unterhalb des zwischen zweitem Rad (5) und Fahrzeugachse (3) angeordneten Gelenks (7) angreift und/oder
- eine zweite Koppelungsvorrichtung, welche am ersten Rad (4) unterhalb des zwischen erstem Rad (4) und Fahrzeugachse (3) angeordneten Gelenks (6) und am zweiten Rad (5) oberhalb des zwischen zweitem Rad (5) und Fahrzeugachse (3) angeordneten Gelenks (7) angreift.

6. Fahrzeug nach wenigstens einem der vorangehenden Ansprüche, wobei die Stellvorrichtung eine Verstellvorrichtung umfasst, durch welche die Räder (4, 5) aktiv gegensinnig verschwenkbar sind.

7. Fahrzeug nach Anspruch 6, wobei die Verstellvorrichtung eine Steuer- oder Regeleinrichtung umfasst.

8. Fahrzeug nach Anspruch 6, wobei die Verstellvorrichtung mechanisch, elektromechanisch oder hydraulisch oder pneumatisch ausgebildet ist.

9. Fahrzeug nach wenigstens einem der Ansprüche 6 bis 8, wobei die Verstellvorrichtung
- am ersten Rad (4) oberhalb des zwischen erstem Rad (4) und Fahrzeugachse (3) angeordneten Gelenks (6) und am zweiten Rad (5) oberhalb des zwischen zweitem Rad (5) und Fahrzeugachse (3) angeordneten Gelenks (7) angreift und/oder
- am ersten Rad (4) unterhalb des zwischen erstem Rad (4) und Fahrzeugachse (3) angeordneten Gelenks (6) und am zweiten Rad (5) unterhalb des zwischen zweitem Rad (5) und Fahrzeugachse (3) angeordneten Gelenks (7) angreift.

10. Fahrzeug nach Anspruch 8 oder 9, wobei die Verstellvorrichtung als Hydraulikvorrichtung oder Pneumatikvorrichtung ausgebildet ist, wobei eine Hydraulikpumpe (11) bzw. Pneumatikpumpe zum Beaufschlagen der Hydraulikvorrichtung bzw. Pneumatikvorrichtung mit Druck vorgesehen ist.

11. Fahrzeug nach wenigstens einem der vorangehenden Ansprüche, wobei die Gelenke (6, 7) in der horizontalen und/oder der vertikalen Mittelebene der Räder (4, 5) und/oder in den Rädern (4, 5) angeordnet sind.

12. Fahrzeug nach wenigstens einem der vorangehenden Ansprüche, wobei die Räder (4, 5) als Walzen, vorzugsweise als Stachelwalzen, ausgebildet sind.

13. Fahrzeug nach Anspruch 12, wobei - vorzugsweise die Räder (4, 5) als Stachelwalzen ausgebildet sind und - an oder neben den Rädern (4, 5) eine gesonderte Lauffläche (12), vorzugsweise aus Gummi, angeordnet ist, wobei die Räder (4, 5) in einem aus der Horizontale gegensinnig verschwenkten Zustand den Untergrund über die gesonderten Laufflächen (12) kontaktieren.

14. Fahrzeug nach wenigstens einem der vorangehenden Ansprüche, wobei die Räder (4, 5) oder die wenigstens eine Fahrzeugachse (3) jeweils
- entweder verschiebbar und vorzugsweise schwenkbar an einer Führung (48) gelagert sind, wobei vorzugsweise die Führungen (48) entlang der Schwenkachsen (8, 9) verlaufen oder
- an einem Hebel (50) entlang eines Bogens verschwenkbar gelagert sind.

## Claims

1. A vehicle (1) comprising a connecting device (2) for attachments and a vehicle axle (3) on which a first and a second wheel (4, 5) are rotatably mounted, wherein provided between each wheel (4, 5) and the vehicle axle (3) is at least one joint (6, 7) which allows a pivotal movement of each wheel (4, 5) about a pivot axis (8, 9) extending transversely relative to the vehicle axle (3) and at least approximately horizontally and wherein adaptation of the wheels (4, 5) to a ground surface is effected by oppositely directed pivotal movement of the wheels (4, 5) and wherein there is provided an adjusting device by which the pivotal movement of the wheels (4, 5) about the pivot axes (8, 9) can be influenced, **characterised in that**
- the vehicle (1) is in the form of a single-axle vehicle and
- the adjusting device has at least one coupling device which is of a mechanical configuration, in the form of a hydraulic device or in the form of a pneumatic device,
- the wheels (4, 5) are coupled together by way of the at least one coupling device in such way that
• the coupling device at least partially prevents unwanted pivotal movement of the wheels (4, 5) in the same direction under the influence of the force of gravity because the first and the second wheels upon pivotal movement in the same direction act against each other by way of the at least one coupling device which is mechanical, in the form of a hydraulic device or in the form of a pneumatic device, and thus block each other, and that
• the coupling device at least partially permits pivotal movement of the wheels (4, 5) in opposite directions for adaptation to the ground surface.

2. A vehicle according to claim 1 wherein the adjusting device includes an openloop or closed-loop control device.

3. A vehicle according to claim 1 wherein the at least one coupling device is of a mechanical configuration, in the form of a lever mechanism, a cable pull or a spindle drive.

4. A vehicle according to claim 1 wherein the at least one coupling device has a pressure storage device (10), preferably a bladder storage device.

5. A vehicle according to at least one of the claims 1 to 4 wherein the at least one coupling device includes:
- a first coupling device which engages the first wheel (4) above the joint (6) arranged between the first wheel (4) and the vehicle axle (3) and engages the second wheel (5) beneath the joint (7) arranged between the second wheel (5) and the vehicle axle (3), and/or
- a second coupling device which engages the first wheel (4) beneath the joint (6) arranged between the first wheel (4) and the vehicle axle (3) and engages the second wheel (5) above the joint (7) arranged between the second wheel (5) and the vehicle axle (3).

6. A vehicle according to at least one of the preceding claims wherein the adjusting device includes an adjustment device by which the wheels (4, 5) are actively pivotable in opposite directions.

7. A vehicle according to claim 6 wherein the adjustment device includes an openloop or closed-loop control device.

8. A vehicle according to claim 6 wherein the adjustment device is of a mechanical configuration, electromechanical or hydraulic or pneumatic.

9. A vehicle according to at least one of the claims 6 to 8 wherein the adjustment device
- engages the first wheel (4) above the joint (6) arranged between the first wheel (4) and the vehicle axle (3) and engages the second wheel (5) above the joint (7) arranged between the second wheel (5) and the vehicle axle (3) and/or
- engages the first wheel (4) beneath the joint (6) arranged between the first wheel (4) and the vehicle axle (3) and engages the second wheel (5) beneath the joint (7) arranged between the second wheel (5) and the vehicle axle (3).

10. A vehicle according to claim 8 or 9 wherein the adjustment device is in the form of a hydraulic device or a pneumatic device, wherein there is provided a hydraulic pump (11) or, respectively, pneumatic pump for applying pressure to the hydraulic device or, respectively, the pneumatic device.

11. A vehicle according to at least one of the preceding claims wherein the joints (6, 7) are arranged in the horizontal and/or the vertical central plane of the wheels (4, 5) and/or in the wheels (4, 5).

12. A vehicle according to at least one of the preceding claims wherein the wheels (4, 5) are in the form of rollers, preferably spiked rollers.

13. A vehicle according to claim 12 wherein - preferably the wheels (4, 5) are in the form of spiked rollers and - arranged at or beside the wheels (4, 5) is a separate running surface (12), preferably comprising rubber, wherein the wheels (4, 5) contact the ground surface by way of the separate running surfaces (12) in a state of being pivoted out of the horizontal in opposite directions.

14. A vehicle according to at least one of the preceding claims wherein the wheels (4, 5) or the at least one vehicle axle (3) respectively
- are either mounted displaceably and preferably pivotably on a guide (48), wherein preferably the guides (48) extend along the pivot axes (8, 9) or
- are mounted to a lever (50) pivotably along an arc.

## Revendications

1. Véhicule (1) doté d'un dispositif d'attelage (2) pour équipements et d'un essieu de véhicule (3), sur lequel une première et une deuxième roue (4, 5) peuvent être disposées en rotation, dans lequel au moins une articulation (6, 7) est prévue entre chaque roue (4, 5) et l'essieu de véhicule (3), laquelle autorise un pivotement de chaque roue (4, 5) autour d'un axe de pivot (8, 9), lequel est transversal par rapport à l'essieu de véhicule (3) et est au moins approximativement horizontal et dans lequel une adaptation des roues (4, 5) à un terrain s'effectue par un pivotement des roues (4, 5) en sens opposé et dans lequel un dispositif de réglage est prévu, par lequel le pivotement des roues (4, 5) autour des axes de pivot (8, 9) peut être influencé, **caractérisé en ce que**
- le véhicule (1) est réalisé comme véhicule à un essieu et **en ce que**
- le dispositif de réglage comporte au moins un dispositif d'accouplement, lequel est réalisé comme dispositif mécanique, hydraulique ou pneumatique et
- les roues (4, 5) peuvent être accouplées l'une à l'autre par le biais de l'au moins un dispositif d'accouplement de telle sorte que
• le dispositif d'accouplement empêche au moins partiellement un pivotement indésirable des roues (4, 5) dans le même sens sous l'influence de la gravité parce que la première et la deuxième roue, lors de pivotements dans le même sens, opèrent l'une contre l'autre par le biais de l'au moins un dispositif d'accouplement réalisé comme dispositif mécanique, hydraulique ou pneumatique et se bloquent ainsi et que
• le dispositif d'accouplement autorise au moins partiellement le pivotement des roues (4, 5) en sens opposé pour adaptation au terrain.

2. Véhicule selon la revendication 1, dans lequel le dispositif de réglage comprend un moyen de commande ou de régulation.

3. Véhicule selon la revendication 1, dans lequel l'au moins un dispositif d'accouplement est réalisé mécaniquement comme système de leviers, palan ou entraînement à broche.

4. Véhicule selon la revendication 1, dans lequel l'au moins un dispositif d'accouplement comporte un accumulateur de pression (10), de préférence un accumulateur à vessie.

5. Véhicule selon au moins une des revendications 1 à 4, dans lequel l'au moins un dispositif d'accouplement comprend :
- un premier dispositif d'accouplement, lequel entre en prise sur la première roue (4) au-dessus de l'articulation (6) disposée entre la première roue (4) et l'essieu de véhicule (3) et sur la deuxième roue (5) en-dessous de l'articulation (7) disposée entre la deuxième roue (5) et l'essieu de véhicule (3) et/ou
- un deuxième dispositif d'accouplement, lequel entre en prise sur la première roue (4) en-dessous de l'articulation (6) disposée entre la première roue (4) et l'essieu de véhicule (3) et sur la deuxième roue (5) au-dessus de l'articulation (7) disposée entre la deuxième roue (5) et l'essieu de véhicule (3).

6. Véhicule selon au moins une des revendications précédentes, dans lequel le dispositif de réglage comprend un dispositif d'ajustage, par lequel les roues (4, 5) peuvent pivoter activement en sens opposé.

7. Véhicule selon la revendication 6, dans lequel le dispositif d'ajustage comprend un moyen de commande ou de régulation.

8. Véhicule selon la revendication 6, dans lequel le dispositif d'ajustage est réalisé comme mécanique, électromécanique ou hydraulique ou pneumatique.

9. Véhicule selon au moins une des revendications 6 à 8, dans lequel le dispositif d'ajustage
- entre en prise sur la première roue (4) au-dessus de l'articulation (6) disposée entre la première roue (4) et l'essieu de véhicule (3) et sur la deuxième roue (5) au-dessus de l'articulation (7) disposée entre la deuxième roue (5) et l'essieu de véhicule (3) et/ou
- entre en prise sur la première roue (4) en-dessous de l'articulation (6) disposée entre la première roue (4) et l'essieu de véhicule (3) et sur la deuxième roue (5) en-dessous de l'articulation (7) disposée entre la deuxième roue (5) et l'essieu de véhicule (3).

10. Véhicule selon la revendication 8 ou 9, dans lequel le dispositif d'ajustage est réalisé comme dispositif hydraulique ou dispositif pneumatique, dans lequel une pompe hydraulique (11) ou une pompe pneumatique est prévue pour mettre sous pression le dispositif hydraulique ou le dispositif pneumatique.

11. Véhicule selon au moins une des revendications précédentes, dans lequel les articulations (6, 7) sont disposées dans le plan médian horizontal et/ou le plan médian vertical des roues (4, 5) et/ou dans les roues (4, 5).

12. Véhicule selon au moins une des revendications précédentes, dans lequel les roues (4, 5) sont réalisées comme des rouleaux, de préférence comme des rouleaux à pointes.

13. Véhicule selon la revendication 12, dans lequel - de préférence les roues (4, 5) sont réalisées comme des rouleaux à pointes et - une surface de roulement (12) séparée, de préférence en caoutchouc, est disposée sur ou à côté des roues (4, 5), dans lequel les roues (4, 5) entrent en contact avec le terrain par le biais des surfaces de roulement séparées (12) dans un état pivoté en sens opposé hors de l'horizontale.

14. Véhicule selon au moins une des revendications précédentes, dans lequel les roues (4, 5) ou l'au moins un essieu de véhicule (3) sont respectivement disposées
- ou bien de manière coulissante et de préférence pivotante sur un guidage (48), dans lequel les guidages (48) sont de préférence le long des axes de pivot (8, 9) ou bien
- sur un levier (50) de manière pivotante le long d'un arc.
